# EUROPÄISCHE PATENTSCHRIFT

(11) **EP 1 749 629 B1**
(45) Veröffentlichungstag und Bekanntmachung des Hinweises auf die Patenterteilung: **01.05.2013**
(21) Anmeldenummer: 06118237.4
(22) Anmeldetag: 01.08.2006
(51) Int. Cl.: B28C 7/00, C04B 7/47

(54) **Verfahren und Vorrichtung zum Kühlen von Zement oder zementartigen Pulvern**
Method and device for cooling of cement or cementitious powders
Procédé et dispositif pour refroidir du ciment ou des materiaux cimentaires pulvérulents

(30) Priorität: 03.08.2005 DE 102005037080
(43) Veröffentlichungstag der Anmeldung: 07.02.2007
(73) Patentinhaber: Messer Group GmbH, 65812 Bad Soden (DE)
(72) Erfinder: Tauchmann, Jens Messer Group GmbH, 47269 Duisburg (DE)
(74) Vertreter: Münzel, Joachim R.

(56) Entgegenhaltungen:
- WO-A-03/004954
- DE-A1- 4 010 045
- DE-A1-102004 062 670
- US-A- 4 479 362

## Beschreibung

Die Erfindung betrifft ein Verfahren sowie eine Vorrichtung zum Kühlen von Zement oder zementartigen Pulvern gemäß dem Oberbegriff des Anspruchs 1.

Bei der Herstellung von Frischbeton ist es häufig erforderlich, den dem Frischbeton beigemischten Feststoff, etwa Zement oder ein zementartiges Pulver, zu kühlen. Bekannt ist, den Feststoff mit flüssigem Stickstoff in direkten Kontakt zu bringen und dadurch zu kühlen.

Ein solches Verfahren ist beispielsweise aus der DE 36 23 726 A1 bekannt. Beim Gegenstand dieser Druckschrift erfolgt die Zementkühlung dadurch, dass, zugleich mit der Zuführung des Zements in ein Vorratssilo über einen Einfüllstutzen, über eine separate Zuleitung flüssiger Stickstoff in das Zementsilo eingesprüht wird. Beim Kontakt mit dem Zement verdampft der Stickstoff und wird als Gas mit dem Abluftstrom ausgetragen. Mit diesem Verfahren kann jedoch eine ausreichende Kühlung nicht erzielt werden, da bei der getrennten Zuführung von Zement und Stickstoff ein nur unzureichender Wärmekontakt zwischen beiden Stoffen hergestellt wird. Ein großer Teil des eingesetzten Stickstoffs entweicht damit ungenutzt, und das kalte Stickstoffabgas kann leicht eine Vereisung eines dem Silo zugeordneten Entstaubungsfilters bewirken.

Aus der US 44 79 362 ist ein Verfahren zur Kühlung von Zement bekannt, bei dem Zement pneumatisch über eine Förderleitung in ein Silo eingespeist und Flüssigstickstoff über einen in der Zementleitung angeordneten Stutzen eingeleitet wird. Nachteilig bei diesem Verfahren ist, dass auch hier kein homogener Wärmeaustausch zwischen Zement und Stickstoff hergestellt und somit die Enthalpie des Stickstoffs nur unzureichend genutzt wird,

In der DE 40 10 045 A1 ist ein weiteres Verfahren zur Kühlung einer pulverförmigen Substanz, insbesondere Zement, beschrieben, bei dem die Substanz über eine Förderleitung in ein Silo gefördert wird. In der Förderleitung ist eine Venturidüse eingebaut. Der als Kühlmittel eingesetzte flüssige Stickstoff wird durch ein in der Venturidüse angeordnetes Mischrohr in den Förderstrom der Substanz eingedüst. Die mit dem Stickstoff vermischte und dadurch gekühlte Substanz wird anschließend zum Silo gefördert und fällt dort in den Lagerbereich des Silos hinab, während der Stickstoff durch den dem Silo zugeordneten Entstaubungsfilter entweicht.

Nachteilig bei diesem Verfahren ist jedoch, dass es beim Auftreffen des flüssigen Stickstoffs auf die Substanz zum Phasenübergang des Stickstoffs und damit zu einer starken Gasentwicklung an der Einspeisestelle kommt, Dies führt zu einer kurzzeitigen Sperrung des Förderstroms der Substanz. Durch den Stopp des Förderstroms baut sich die Gasblase in der Förderleitung ab und der Feststoffstrom wird wieder aufgenommen, um wiederum den Kontakt der Substanz mit dem Flüssigstickstoff und damit eine starke Gasentwicklung in der Förderleitung auszulösen. Dieser Vorgang wiederholt sich laufend und führt zu einem unregelmäßigen Eintrag der Substanz in das Silo und damit in der Folge zu einem impulsartigen Abblasen von Stäuben über die Entstaubungseinrichtung des Lagersilos. Hierdurch geht Substanz verloren und es kommt zu einer nicht unerheblichen Belastung von Mitarbeitern und Umwelt. Bei einem schon hohen Füllstand des Silos von mehr als 70% kommt es infolge der hohen Gasentwicklung und der damit verbundenen starken turbulenten Gasströmung im oberen Bereich des Silos dazu, dass Zement vom Stickstoffgas mitgerissen wird. Dies führt zu einem weiteren Verlust an Substanz und überdies zu der Forderung, dass im Entstaubungsfilter eine sehr große Filterfläche vorgesehen sein muss.

Aufgabe der Erfindung ist daher, ein Verfahren und eine Vorrichtung zum Kühlen von Zement oder zementartigen Pulvern bereit zu stellen, das sehr effizient arbeitet und die Belastung von Mensch und Umwelt reduziert.

Diese Aufgabe wird mit einer Vorrichtung mit den Merkmalen des Anspruchs 1 sowie mit einer Verwendung der erfindungsgemäßen Vorrichtung mit den Merkmalen des Anspruchs 4 gelöst.

Tatsächlich haben Versuche mit Frischbeton gezeigt, dass es bei der Kühlung von Frischbeton mit Kohlendioxid in Gegenwart von Wasser zur Absenkung des pH-Wertes und damit zu einer drastischen Minderung derBetonqualität kommt. Aus diesem Grund galt Kohlendioxid bislang als ungeeignetes Kühlmittel. Es hat sich jedoch gezeigt, dass die Kühlung von Zement, der im trockenen Zustand vorliegt, mit Kohlendioxid keinen negativen Einfluss auf die Eigenschaften des Frischbetons hat, insbesondere nicht auf den pH-Wert und die Passivität. Auch kommt es nicht zu einem Ausgasen des Kohlendioxids aus dem erzeugten Frischbeton, durch das die Struktur des Betons durch Lunkerbildung verändert werden würde. Kohlendioxid besitzt des weiteren einen erheblich größeren massenspezifischen Kälteinhalt als flüssiger Stickstoff und kann daher bei gleicher Kühlleistung in geringeren Mengen eingesetzt werden. Beim Kontakt mit dem Zement werden daher nur geringere Gasvolumina freigesetzt.

Bei der Zuführung des Kohlendioxids im flüssigen Zustand kann zudem auf aufwändige wärmeisolierte Leitungen verzichtet werden. Verflüssigtes Kohlendioxid besitzt eine kritische Temperatur von 31°C und einen kritischen Druck von 7,4 MPa, und kühlt sich bei seiner Entspannung infolge des Joule - Thomson - Effektes unter Bildung von kaltem Kohlendioxidgas und Kohlendioxidschnee stark ab. Es kann daher in einer Druckleitung bei Umgebungstemperatur herangeführt werden. Gasförmiges Kohlendioxid als Kühlmedium für Zement sollte vorzugsweise eine Temperatur von -78°C bis 5°C, bevorzugt von -78 bis -25°C, aufweisen.

Bevorzugt wird der Zement oder das zementartige Pulver bereits bei seiner Zuführung in ein Silo gekühlt. Hierzu wird der Zement oder das zementartige Pulver über eine Förderleitung in ein Silo transportiert, und Kohlendioxid wird im verflüssigten oder kalten gasförmigen Zustand an einer Einspeisestelle in die Förderleitung eingespeist und in einer Mischstrecke der Förderleitung mit dem Zement vermischt. Die Vermischung und damit die Abkühlung des Zements erfolgt also bereits innerhalb der Förderleitung zum Silo. Beim Eintritt in das Solo trennen sich die Stoffströme von Zement und Kohlendioxidgas. Der Zement fällt in das Silo hinein, während das Kohlendioxidgas über die Entstaubungsanlage ins Freie gelangt. Aufgrund der im Vergleich zu Stickstoff sehr viel geringeren Gasentwicklung kommt es selbst bei schon fast vollständig gefülltem Silo nur in geringfügigem Umfang zum Abblasen von Zementstaub über die Entstaubungsanlage. Die Entstaubungsanlage kann somit entsprechend kleiner konzipiert werden und bedarf nur einer geringeren Wartungsfrequenz im Vergleich zu einem mit Stickstoffkühlung betriebenen Silo gleicher Kapazität.

Im Falle der Kühlung mit Kohlendioxid, das im flüssigen Zustand herangeführt wird, sieht eine besonders vorteilhafte Ausgestaltung der Erfindung vor, dass eine Entspannung des flüssigen Kohlendioxids beim Eintritt in die Förderleitung erfolgt. Bei der Entspannung auf den in der Förderleitung herrschenden Druck kühlt sich das verflüssigte Kohlendioxid unter Bildung von kaltem Kohlendioxidgas und Kohlendioxidschnee auf bis zu -80°C ab. Der Kohlendioxidschnee vermischt sich mit dem Zement in der Förderleitung und sublimiert rasch.

Die beanspruchte Vorrichtung zum Herstellen von Frischbeton umfasst eine in ein Silo einmündenden Förderleitung für Zement oder ein zementartiges Pulver und eine an einer Einspeisestelle in die Förderleitung einmündende Druckleitung für flüssiges Kohlendioxid. Beim Eintritt in die Förderleitung an der Einspeisestelle wird das Kohlendioxid entspannt und unter Bildung von Kohlendioxidgas und Kohlendioxidschnee stark abgekühlt. Gleichzeitig vermischen sich Kohlendioxidgas bzw. Kohlendioxidschnee mit dem durch die Förderleitung transportierten Zement und kühlen diesen ab.

Zweckmäßigerweise ist zwischen der Einspeisestelle und der siloseitigen Mündungsöffnung der Förderleitung eine Mischstrecke zum Mischen des Zements oder des zementartigen Stoffs mit dem Kohlendioxid vorgesehen. Dadurch wird eine gute Durchmischung von Zement und Kohlendioxid erreicht und damit eine gute Kühlwirkung für den Zement erzielt. Zudem gewährleistet die Mischstrecke, dass der Kohlendioxidschnee möglichst vollständig sublimiert und nicht zur Ausbildung von Kohlendioxidblasen im Zement führt.

In der Förderleitung stromab zur Einspeisestelle ist ein Expansionsabschnitt mit erweitertem Querschnitt vorgesehen. Dem aufgrund der Zuführung des Kohlendioxids auftretenden Volomenbedarf wird also dadurch Rechnung getragen, dass der Strömungsquerschnitt stromab zur Einspeisestelle zumindest abschnittsweise vergrößert ist.

Eine besonders bevorzugte Ausgestaltung der Erfindung sieht vor, dass eine Regeleinrichtung die Volumenströme von Zement bzw. zementartigem Stoff und Kohlendioxid in Abhängigkeit von der Temperatur des Zements bzw. des zementartigen Stoffs und/oder der Staubbeladung eines aus dem Silo abgeführten Abgasstromes regelt. Damit wird der Einsatz an Kühlmedium optimiert, der Feststoffaustrag aus dem Silo minimiert und damit die Belastung von Mensch und Umwelt reduziert.

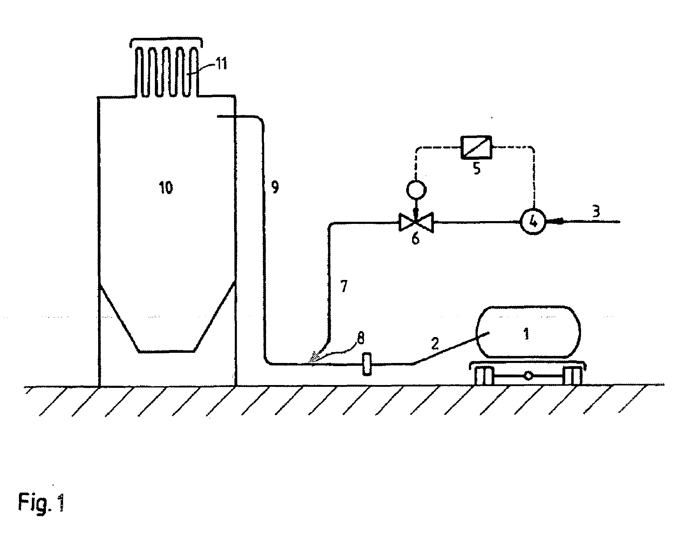

Anhand der Zeichnungen soll ein Ausführungsbeispiel der Erfindung näher erläutert werden. Die einzige Figur (Fig. 1) zeigt schematisch eine erfindungsgemäße Vorrichtung zum Kühlen von Zement.

Bei der Vorrichtung nach Fig. 1 wird Zement aus einem Lieferfahrzeug 1 pneumatisch in ein Silo 10 eingespeist. Die Einspeisung von Zement erfolgt vom Lieferfahrzeug 1 über eine Zuleitung 2, die über einen Anschluss mit einer Förderleitung 9 verbunden ist, die in das Silo 10 einmündet. Am Silokopf ist ein Entstaubungsfilter 11 angeordnet. Flüssiges Kohlendioxid wird aus einer hier nicht gezeigten Kohlendioxidquelle, etwa einem Standtank, über eine Druckleitung 3 durch einen Durchflussmesser 4 zu einem Steuerventil 6 geführt, das mittels der Steuereinheit 5 geregelt wird. Die Steuereinheit 5 steht in hier nicht gezeigter Weise mit einem Sensor zur Erfassung der Temperatur des im Silo 10 gelagerten Zements und/oder einem Sensor zur Erfassung des Feststoffanteils in der dem Entstaubungsfilter 11 zugeführten Abluft in Datenverbindung und ermöglicht so eine in Abhängigkeit von vorgegebenen Werten oder Verläufen der Zementtemperatur bzw. des Feststoffanteils geregelte Zuführung des Flüssigstickstoffs. Vom Steuerventil 6 gelangt das flüssige Kohlendioxid in eine Druckleitung 7, die an einer als Entspannungsdüse konzipierte Einspeisestelle 8 in die Förderleitung 9 einmündet. Im Bereich der Einspeisestelle 8 sind die beiden Leitungen 7,9 derart angeordnet, dass die beiden Stoffströme im spitzen Winkel zueinander geführt werden, um die Förderung in der Förderleitung 9 zu unterstützen. Der Innendurchmesser der Förderleitung 9 ist auf ihrem stromab von der Einspeisestelle 8 angeordneten Abschnitt bis zur Einmündung der Förderleitung 9 in das Silo 10 größer als die Innendurchmesser des stromauf zur Einspeisestelle 8 gelegenen Abschnitts der Förderleitung 9 und der Zuleitung 2.

Beim Betrieb der Vorrichtung wird Zement aus dem Lieferfahrzeug 1 pneumatisch über die Zuleitung 2 und die Förderleitung 9 gefördert. Kohlendioxid wird im flüssigen Zustand über die Druckleitungen 3,7 herangeführt und in genau dosierter Menge vom Steuerventil 6 über die Einspeisestelle 8 in die Förderleitung 9 eingespeist. Da die Temperatur des flüssigen Kohlendioxids im Wesentlichen der Umgebungstemperatur entspricht, kann auf eine aufwändige Wärmeisolierung der Druckleitungen 3,7 verzichtet werden. Das flüssige Kohlendioxid entspannt beim Eintritt in der Förderleitung 9, wobei es teilweise in den gasförmigen Zustand, teilweise in Kohlendioxidschnee übergeht und aufgrund des Joule-Thomson-Effekts stark abkühlt. Das kalte Kohlendioxid vermischt sich in der Förderleitung 9 mit dem Zement und kühlt diesen ab. Der Kohlendioxidschnee sublimiert ganz überwiegend noch innerhalb der Förderleitung 9, zu einem geringeren Teil jedoch erst beim Austritt aus der Förderleitung 9. Der Zement tritt somit bereits als gekühlter Stoffstrahl in das Silo 10 ein und erfährt in der mit kaltem Kohlendioxid angereicherten Atmosphäre im Innem des Silos 10 eine weitere Abkühlung. Das Kohlendioxidgas entweicht über die Entstaubungsanlage 11 und wird entweder in die Außenatmosphäre abgegeben oder aufgefangen und einer weiteren Verwendung zugeführt. Weder in der Förderleitung 9 noch innerhalb des Silos 10 kommt es dabei zu einer nennenswerten chemischen Reaktion zwischen dem Zement und dem Kohlendioxid. Die im Vergleich zur Stickstoffkühlung gleicher Kühlleistung um bis zu einem Faktor Zwei verminderte Gasentwicklung und damit verbunden das vergleichsweise geringere Abblasen von Zementstaub ermöglicht den Einbau einer kleineren und damit preiswerteren Entstaubungsanlage 11, zudem wird eine gute Wärmeübertragung vom Stickstoff auf den Zement gewährleistet, ohne dass es zu pulsartigen Störungen der Zementzufuhr kommt.

### Bezugszeichenliste

- 1.: Lieferfahrzeug
- 2.: Zuleitung
- 3.: Druckleitung
- 4.: Durchflussmesser
- 5.: Steuereinheit
- 6.: Steuerventil
- 7.: Druckleitung
- 8.: Einspeisestelle
- 9.: Förderleitung
- 10.: Silo
- 11.: Entstaubungsfilter

## Patentansprüche

1. Vorrichtung zum Herstellen von Frischbeton unter Beimischung von Zement oder zementartigen Pulvern, mit einer in ein Silo (10) einmündenden Förderleistung (9) für Zement oder ein zementartiges Pulver und mit einer an einer Einspeisestelle (8) in die Förderleitung einmündenden Druckleitung (3,7) für flüssiges Kohlendioxid sowie mit einem in der Förderleitung (9) stromab zur Einspeisestelle (8) vorgesehenen Expansionsabschnitt mit erweitertem Querschnitt,
**dadurch gekennzeichnet, dass** im Bereich der Einspeisestelle (8) die Förderleitung (9) und die Druckleitung (7) derart angeordnet sind, dass die beiden Stoffströme im spitzen Winkel zueinander geführt werden, um die Förderung in der Förderleitung (9) zu unterstützen.

2. Vorrichtung nach Anspruch 1, **dadurch gekennzeichnet, dass** zwischen der Einspeisestelle (8) und der siloseitigen Mündungsöffnung der Förderleitung (9) eine Mischstrecke zum Mischen des Zements oder des zementartigen Stoffs mit dem Kohlendioxid vorgesehen ist.

3. Vorrichtung nach einem der Ansprüche 1 oder 2, **dadurch gekennzeichnet, dass** eine Regeleinrichtung (5) die Volumenströme von Zement bzw. zementartigem Stoff und/oder Kohlendioxid in Abhängigkeit von der Temperatur des Zements bzw. des zementartigen Stoffs und/oder der Staubbeladung eines aus dem Silo (10) abgeführten Abgasstromes regelt.

4. Verwendung einer Vorrichtung nach einem der vorhergehenden Ansprüche zur Herstellung von Frischbeton.

## Claims

1. Method for producing fresh concrete with the admixture of cement or cementitious powders, with a conveying line (9) for cement or a cementitious powder that opens into a silo (10) and with a pressure line (3, 7) for liquid carbon dioxide that opens into the conveying line at a feed point (8), and also with an expansion section of widened cross section that is provided in the conveying line (9) downstream of the feed point (8), **characterized in that** the conveying line (9) and the pressure line (7) are arranged in the region of the feed point (8) in such a way that the two material flows are guided at an acute angle to one another in order to support the conveying in the conveying line (9).

2. Device according to Claim 1, **characterized in that** a mixing section for mixing the cement or the cementitious material with the carbon dioxide is provided between the feed point (8) and the silo-side mouth opening of the conveying line (9).

3. Device according to either of Claims 1 and 2, **characterized in that** a regulating device (5) regulates the volume flows of cement or cementitious material and/or carbon dioxide as a function of the temperature of the cement or the cementitious material and/or of the dust load of an exhaust-gas flow discharged from the silo (10).

4. Use of a device according to one of the preceding claims for producing fresh concrete.

## Revendications

1. Dispositif pour fabriquer du béton frais par mélange de ciment ou de matériaux cimentaires pulvérulents, comprenant une conduite de transport (9) débouchant dans un silo (10), pour du ciment ou un matériau cimentaire pulvérulent et comprenant une conduite de pression (3, 7) débouchant au niveau d'un point d'injection (8) dans la conduite de transport, pour du dioxyde de carbone fluide, ainsi qu'une portion d'expansion prévue en aval du point d'injection (8) dans la conduite de transport (9), ayant une section transversale élargie, **caractérisé en ce que** dans la région du point d'injection (8), la conduite de transport (9) et la conduite de pression (7) sont disposées de telle sorte que les deux flux de matière soient guidés suivant un angle aigu l'un par rapport à l'autre, afin de favoriser le transport dans la conduite de transport (9).

2. Dispositif selon la revendication 1, **caractérisé en ce qu'**entre le point d'injection (8) et l'ouverture d'embouchure de la conduite de transport (9) du côté du silo est prévue une section de mélange pour mélanger le ciment ou le matériau cimentaire avec le dioxyde de carbone.

3. Dispositif selon l'une quelconque des revendications 1 ou 2, **caractérisé en ce qu'**un dispositif de régulation (5) régule les débits volumiques de ciment ou de matériau cimentaire et/ou de dioxyde de carbone en fonction de la température du ciment ou du matériau cimentaire et/ou en fonction de la charge de poussière d'un flux de gaz d'échappement évacué du silo (10).

4. Utilisation d'un dispositif selon l'une quelconque des revendications précédentes pour la fabrication de béton frais.
